(19) Europäisches Patentamt
European Patent Office
Office européen des brevets

(11) **EP 2 631 125 B1**

(12) **EUROPÄISCHE PATENTSCHRIFT**

(45) Veröffentlichungstag und Bekanntmachung des Hinweises auf die Patenterteilung:
**04.05.2016 Patentblatt 2016/18**

(51) Int Cl.:
***B60R 21/0134*** *(2006.01)*

(21) Anmeldenummer: **13152189.0**

(22) Anmeldetag: **22.01.2013**

(54) **Verfahren und Vorrichtung zur Plausibilisierung einer vorausschauenden Sensorik**

Method and device for checking the plausibility of a predictive sensor system

Procédé et dispositif destinés au calcul de plausibilité d'une capteur pronostique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2012 DE 102012202835**

(43) Veröffentlichungstag der Anmeldung:
**28.08.2013 Patentblatt 2013/35**

(73) Patentinhaber: **ROBERT BOSCH GMBH
70442 Stuttgart (DE)**

(72) Erfinder:
• **Freienstein, Heiko
71263 Weil Der Stadt (DE)**
• **Settele, Axel
71735 Eberdingen-Hochdorf (DE)**
• **Oswald, Klaus
73240 Wendlingen (DE)**

(56) Entgegenhaltungen:
**EP-A2- 2 333 578        WO-A1-2011/051224
WO-A2-2007/119285        DE-A1-102007 017 125**

## Beschreibung

Stand der Technik

Die vorliegende Erfindung bezieht sich auf ein Verfahren zur Plausibilisierung einer vorausschauenden Sensorik eines Fahrzeugs, auf eine entsprechende Vorrichtung sowie auf ein entsprechendes Computerprogrammprodukt.

Mittels eines sogenannten Upfront-Sensors kann ein Crash eines Fahrzeugs erkannt werden. Speziell zur Erkennung eines Aufpralls eines Fußgängers können Fußgängerschutzsensoren eingesetzt werden. Eine vorausschauende Sensorik kann für die Unterstützung der Crasherkennung eingesetzt werden.

Die Interpretation von Umfeldsensorik-basierten Daten ist generell eine sehr anspruchsvolle Klassifikationsaufgabe, die selbst von den besten Systemen nicht zu 100% gelöst werden kann. Die von der Umfeldsensorik gelieferten Daten können aufgrund der komplexen Situationen im Feld in gewissen Fällen fehlerbehaftet sein, was zu sogenannten "False Positives" oder folgeschweren Abweichungen in den Ausgangsdaten führen kann. Wird ein solches Datum verwendet, um beispielsweise eine bestimmte Airbagstufe zu zünden, so soll der Einfluss gegenüber den vorhandenen Informationen entsprechend niedrig gewählt werden, oder eine unabhängige Plausibilisierung durchgeführt werden.

Die Druckschrift DE 103 09 714 A1 offenbart einen Sensor mit mehreren Schaltern zur Aufprallerkennung.

Die WO 2011/051224 A1 beschreibt ein Verfahren und ein Steuergerät zur Anpassung der Steifigkeit eines irreversiblen Pralldämpfers eines Fahrzeugs.

Offenbarung der Erfindung

Vor diesem Hintergrund wird mit der vorliegenden Erfindung ein Verfahren zur Plausibilisierung einer vorausschauenden Sensorik im Crash durch Fußgängerschutzsensoren, weiterhin eine Vorrichtung, die dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Beschleunigungssensoren können zur Auslösung eines Fußgängerschutzsystems, beispielsweise in Form einer aktiven Motorhaube oder eines Pop-up-Hood, eingesetzt werden. Dabei werden üblicherweise mindestens zwei Beschleunigungssensoren, als Fußgängerschutzsensoren bezeichnet, auf der Stoßfängerverkleidung des Fahrzeugs angeordnet.

Vorausschauende Sensorik kann für die Unterstützung der Crasherkennung eingesetzt werden. Solche Systeme können auf verschiedenen Messprinzipien beruhen, wie beispielsweise Radar, Video, Stereo-Video, Ultraschall, Lidar oder andere Verfahren, z. B. Time-of-Flight Imager in einer 3D-Kamera. Durch den Einsatz einer solchen Technologie kann gegebenenfalls auf den Upfront-Sensor verzichtet werden.

Die vorausschauende Sensorik kann vor dem Auftreten des Crashs und während des Crashs qualitativ hochwertige Signale zur Verfügung stellen, wobei die von der Umfeldsensorik gelieferten Daten aufgrund der komplexen Situationen im Feld in gewissen Fällen fehlerhaft sein können. Zusätzlich können Aufprallsensoren, beispielsweise Fußgängerschutzsensoren, in der sehr frühen Crashphase, quasi unmittelbar nach Kontakt, crashspezifische Informationen zur Verfügung stellen.

Eine Plausibilisierung der Ergebnisdaten eines vorausschauenden Sensors im Crash kann durch die Nutzung von Fußgängerschutzsensor-Daten erfolgen. Durch diese Verbindung von Eingangsdaten aus verschiedenen Messprinzipien kann der Einfluss dieser plausiblen Daten auf die Auslöseentscheidung entsprechend hoch gewählt werden.

Somit kann eine Kombination von Ausgabedaten einer vorausschauenden Sensorik mit den Beschleunigungsdaten des Fußgängerschutzsensors erfolgen. Der Fußgängerschutzsensor kann in der Stoßfängerverkleidung angebracht sein und führt zu frühen Signalen im Crashverlauf. Ein durch diese beiden unabhängigen Systeme im Einklang stehende Klassifikation kann mit hohem Gewicht in einem Kernalgorithmus des Airbag-Steuergerätes berücksichtigt werden oder Einfluss auf die Auslöselogik selbst, z. B. die Auswahl der zu aktivierenden Schutzsysteme, nehmen. Eine vorgeschaltete Plausibilisierung der Daten vor Eingang in den Core-Algorithmus bietet die Möglichkeit, die spezifischen Stärken der jeweiligen Sensierprinzipien optimal zu nutzen.

Es kann also eine Kombination eines Closing Velocity Sensors, also eines Sensors zur Erfassung von Richtung und Geschwindigkeit eines sich dem Fahrzeug nähernden Objekts, mit einer exponierten Kontakt-Fußgängerschutzsensorik erfolgen. Dabei kann für beide Systeme auf bekannte Systeme zurückgegriffen werden. Vorteilhafterweise kann eine Nutzung der Crashinformation des Fußgängerschutzsystems zur Plausibilisierung des Signals des Closing Velocity Sensors eingesetzt werden.

Ein Verfahren zur Plausibilisierung einer vorausschauenden Sensorik eines Fahrzeugs umfasst den folgenden Schritt:

Plausibilisieren eines aus einem Sensorsignal der vorausschauenden Sensorik bestimmten Kollisionsparameters unter Verwendung eines Aufprallsensorsignals, das ein Signal eines Aufprallsensors des Fahrzeugs repräsentiert.

Bei dem Fahrzeug kann es sich um ein Kraftfahrzeug, beispielsweise einen Personenkraftwagen, einen Lastkraftwagen oder ein sonstiges Nutzfahrzeug handeln. Unter einer vorausschauenden Sensorik kann man einen oder mehrere Sensoren verstehen, die bereits vor einem Crash, also einer Kollision, diesen prognostizieren, d. h., vorausschauende Sensorik kann vor dem Auftreten eines Crashs zur Crasherkennung eingesetzt werden. Unter einem vorausschauenden Sensor kann man eine 2D-Kamera, eine 3D-Kamera, einen Infrarot-, Lidar-, Radar und/oder Ultraschall-Sensor verstehen. Durch Auswertung von durch die vorausschauende Sensorik bereitgestellten Daten können Crash-Situationen frühzeitig erkannt werden. Auch können über eine vorausschauende Sensorik viele wichtige Kollisionsparameter ermittelt werden. Dabei kann unter einer vorausschauenden Sensorik bereits die Verbindung eines oder mehrerer Sensoren mit einer Sensordatenaufbereitung und -auswertung verstanden werden. Eine vorausschauende Sensorik kann zur Umgebungserfassung und Erstellung eines Umfeldmodells genutzt werden. Somit kann im Allgemeinen unter einer vorausschauenden Sensorik bereits die Verbindung von Sensoren mit einer Perzeption verstanden werden, wobei die Perzeption die drei Komponenten der Sensordatenaufbereitung, Objektbildung und Situationsanalyse umfasst.

Unter einem Kollisionsparameter kann verstanden werden die Zeit bis zur Kollision, ein Kollisionspunkt am Fahrzeug, eine Überlappung des Fahrzeugs mit dem Kollisionsgegenstand, eine Masse des Kollisionsgegenstandes, eine Aufprallgeschwindigkeit bzw. eine Kollisionsgeschwindigkeit, ein Crash-Winkel und/oder eine Klassifizierung des Kollisionsgegenstandes. Dabei kann der Kollisionsgegenstand ein Fahrzeug sein, oder ein Fußgänger, ein Baum, oder ein anderer beweglicher oder starrer Körper.

Unter einem Aufprallsensorsignal kann im Allgemeinen ein Signal eines Aufprallsensors verstanden werden. Bei dem Aufprallsensor kann es sich um eine Kontaktsensorik, beispielsweise zum Fußgängerschutz handeln. Beispielsweise kann es sich bei dem Aufprallsensor um einen Beschleunigungssensor, Lichtwellenleiter und gleichzeitig oder alternativ einen Druckschlauch bzw. Luftschlauchsensor handeln kann. Der Aufprallsensor kann in einer vorderen Stoßfängerverkleidung des Fahrzeuges montiert sein. Beispielsweise kann der Aufprallsensor in der Stoßstange oder einem Schaum der Stoßstange angeordnet sein. Das Fahrzeug kann mindestens zwei Aufprallsensoren aufweisen. Das Fahrzeug kann ein Aufprallsensorsystem aufweisen, welches einen Rückschluss über den Aufprallort erlaubt.

Ein im Schritt des Plausibilisierens plausibilisierter Kollisionsparameter oder ein plausibilisiertes Sensorsignal kann an eine Auslöselogik eines Insassenschutzsystems übergeben werden. Die Auslöselogik kann ausgebildet sein, um mithilfe des plausibilisierten Kollisionsparameters Schutzsysteme freizugeben oder zu sperren. Die Auslöselogik kann in einem Steuergerät realisiert sein. Bei dem Insassenschutzsystem kann es sich um ein Rückhaltesystem handeln, das beispielsweise einen Airbag und/oder einen Gurtstraffer umfassen kann.

Der erfindungsgemäße Ansatz bietet den Vorteil, dass vorausschauende Sensorik mehr Informationen liefern kann als ein klassischer Sensor, wie z. B. ein Aufprallsensor, ein Upfront-Sensor und/oder ein Beschleunigungssensor, und dass die Daten der vorausschauenden Sensorik bereits vor einem Crash zur Verfügung stehen. Durch die Plausibilisierung kann eine eventuelle Fehlerbehaftung der Ergebnisdaten der vorausschauenden Sensorik durch die Nutzung von Daten eines Aufprallsensors, beispielsweise eines Fußgängerschutz-Sensors, eliminiert werden. Durch die Verbindung von Eingangsdaten aus verschiedenen Messprinzipien kann der Einfluss dieser plausibilisierten Daten auf die Auslöseentscheidung von Insassenschutzsystemen entsprechend hoch gewählt werden.

Im Schritt des Plausibilisierens wird ein Schritt des Bewertens eines Kollisionsparameters hinsichtlich seiner Zuverlässigkeit unter Verwendung des Aufprallsensorsignals durchgeführt. Die Berechnung der Zuverlässigkeit kann eine Verwertung der Daten der vorausschauenden Sensorik für Insassenschutzsysteme ermöglichen, die ohne die zusätzliche Information zur Zuverlässigkeit aufgrund ihrer Fehleranfälligkeit nicht verwendet werden könnten. Die Sicherheit des Insassenschutzsystems kann durch die Verwendung von Informationen aus unterschiedlichen Sensierprinzipien steigen.

Auch wird im Schritt des Plausibilisierens aus dem Aufprallsensorsignal ein Kollisionswert bestimmt werden. Im Schritt des Bewertens kann die Zuverlässigkeit mittels eines Vergleichs zwischen dem Kollisionsparameter, bestimmt aus dem Sensorsignal der vorausschauenden Sensorik, und dem Kollisionswert ermittelt werden. Dabei kann unter einem Kollisionswert ein Wert verstanden werden, der einen Kollisionszeitpunkt, eine Abschätzung des Kollisionspunktes oder Auftreffpunktes, eine Eindringinformation, eine Relativgeschwindigkeit oder eine Überlappung repräsentiert. Der Kollisionswert kann einen aus Beschleunigungswerten von mindestens zwei Aufprallsensoren abgeleiteten Wert darstellen. Durch den Vergleich eines bereits vor dem Crash ermittelten Kollisionsparameters mit einem während des Crashs von mindestens einem Aufprallsensor ermittelten Kollisionswert kann eine qualitative und quantitative Abschätzung der Güte oder Zuverlässigkeit des Kollisionsparameters von der vorausschauenden Sensorik bestimmt werden.

Dabei wird im Schritt des Plausibilisierens ein Schritt des Gewichtens des Kollisionsparameters basierend auf der Zuverlässigkeit und einer für den Kollisionsparameter vorbestimmten Informationsgüte durchgeführt. Die Informationsgüte kann von der Art des ermittelten Kollisionswertes abhängig sein. So kann beispielsweise für den Kontaktzeitpunkt eine geringere Informationsgüte vorgesehen sein und für eine Relativgeschwindigkeit eine hohe Informationsgüte bestimmt sein. Der gewichtete Kollisionsparameter kann an einen Core-Algorithmus für ein Insassenschutzsystem zusammen mit dem Kollisionsparameter übermittelt werden. Der plausibilisierte und gewichtete Kollisionsparameter kann die Auslöselogik eines Insassen-Schutzsystems dahin gehend beeinflussen, dass Schutzsysteme freigegeben oder gesperrt werden.

Ferner kann das Verfahren einen Schritt des Bestimmens des Kollisionsparameters in Form eines Kontaktzeitpunktes, einer Überlappung (Overlap), eines Versatzes (Offset), einer Verformungsgeschwindigkeit, einer Aufprallmasse und/oder einem Kontaktort aus dem Sensorsignal der vorausschauenden Sensorik aufweisen. Die verschiedenartigen Formen des Kollisionsparameters können die Auslöselogik für ein Insassenschutzsystem beeinflussen und Schutzsysteme freigeben oder sperren. So können mehr Daten erfasst werden als bei Fußgängerschutzsensoren und/oder Upfront-Sensoren und diese Daten können auch früher zur Verfügung stehen.

Ferner kann im Schritt des Plausibilisierens ein aus dem Sensorsignal der vorausschauenden Sensorik bestimmter weiterer Kollisionsparameter unter Verwendung des Aufprallsensorsignals plausibilisiert werden. Im Schritt des Gewichtens kann der weitere Kollisionsparameter basierend auf der für den weiteren Kollisionsparameter ermittelten Zuverlässigkeit und einer für den weiteren Kollisionsparameter vorbestimmten weiteren Informationsgüte gewichtet werden. Es ist von Vorteil für die Auslöselogik des Insassenschutzsystems, wenn nicht nur ein Kollisionsparameter zur Verfügung steht, sondern mindestens zwei. Dadurch lassen sich die Qualität und die Zuverlässigkeit des Gesamtsystems verbessern.

Ferner kann das erfindungsgemäße Verfahren einen Schritt des Einlesens des Aufprallsensorsignals und zusätzlich oder alternativ des Sensorsignals von der vorausschauenden Sensorik aufweisen. Dadurch lässt sich das Verfahren unabhängig von anderen Systemen in einem Fahrzeug implementieren.

Ferner kann das Aufprallsensorsignal ausgebildet sein, um einen Zustand des Aufprallsensors und zusätzlich oder alternativ einer Übertragungsleitung für das Aufprallsensorsignal des Aufprallsensors anzuzeigen. Im Schritt des Plausibilisierens kann der Kollisionsparameter unter Verwendung des Zustands plausibilisiert werden. Unter einem Zustand des Aufprallsensors kann dessen Funktionstüchtigkeit verstanden werden. So kann bei einem Crash der Aufprallsensor zerstört werden. Diese Information kann den Crash an sich validieren. Im Schritt des Plausibilisierens kann der Zustand regelmäßig überwacht werden und somit ein von der vorausschauenden Sensorik erkannter Crash plausibilisiert werden.

Der Kabelbaum im Fahrzeug kann für die Auswertung des Zustandes des Aufprallsensors optimiert werden. Hierzu kann der Kabelbaum mindestens drei Äste im Frontbereich des Fahrzeuges aufweisen. Die drei Äste des Kabelbaums können derart ausgeprägt sein, dass ein Kabelbaumast den rechten Frontbereich abdeckt und respektive ein Ast den mittleren Frontbereich sowie der dritte Ast den linken Frontbereich des Fahrzeuges abdeckt. Da bei Bussystemen ein defekter Sensor zu einem Ausfall des gesamten Astes führen kann, kann bei einem auf diese Anwendung optimierten Kabelbaum die Auswertung der Crashgeometrie über eine Busüberwachung erfolgen. Dabei soll der Kabelbaum so ausgeführt sein, dass eine Kollision auf einer Seite des Fahrzeugs auch nur den Kabelbaum auf dieser Seite zerstört.

Die vorliegende Erfindung schafft ferner eine Vorrichtung, die ausgebildet ist, um die Schritte des erfindungsgemäßen Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät, beispielsweise ein Steuergerät, verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einem Steuergerät ausgeführt wird.

Die Erfindung wird nachstehend anhand der beigefügten Zeichnungen beispielhaft näher erläutert. Es zeigen:

Fig. 1   ein Fahrzeug mit einer Vorrichtung zur Plausibilisierung gemäß einem Ausführungsbeispiel der vorliegenden Erfindung;

Fig. 2   ein Ablaufdiagramm eines Ausführungsbeispiels der vorliegenden Erfindung als Verfahren;

Fig. 3   eine bildliche Darstellung eines Fahrzeugs mit Fußgängerschutzsensor und Upfront-Sensor; und

Fig. 4   ein Fahrzeug mit zur Crashauswertung optimiertem Kabelbaum.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugzeichen verwendet, wobei auf eine wiederholte Beschreibung dieser Elemente verzichtet wird.

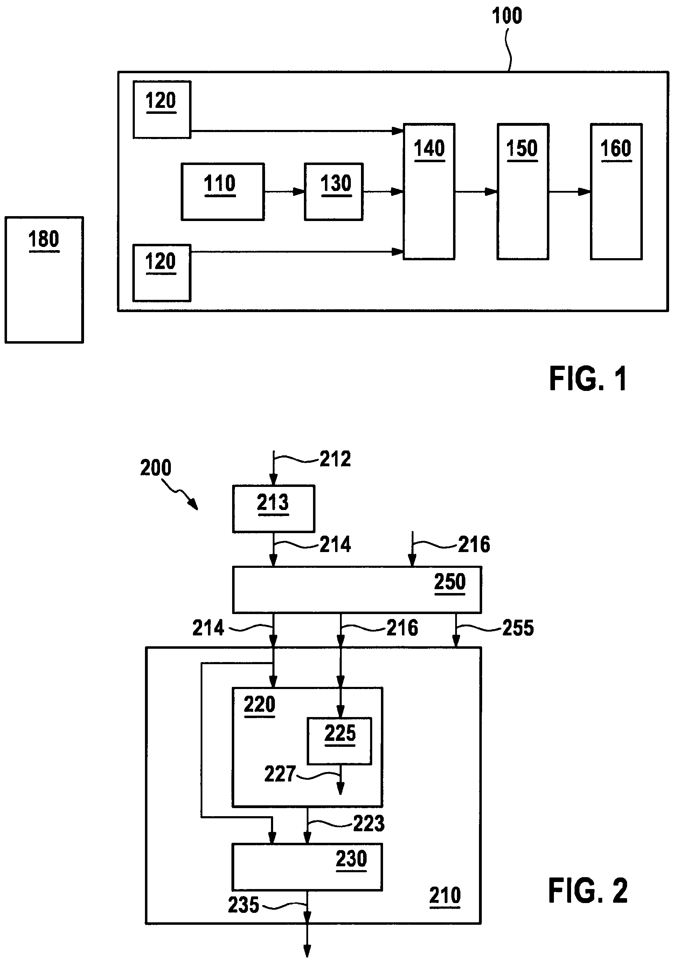

Fig. 1 zeigt eine schematische Darstellung eines Fahrzeugs 100 mit einer Vorrichtung zur Plausibilisierung einer vorausschauenden Sensorik gemäß einem Ausführungsbeispiel der vorliegenden Erfindung.

Das Fahrzeug 100 weist eine vorausschauende Sensorik 110 und zwei Aufprallsensoren 120 auf. Die zwei Aufprallsensoren 120 sind beabstandet voneinander, beispielsweise auf gegenüberliegenden Seiten des Fahrzeugs 100 angeordnet. Gemäß diesem Ausführungsbeispiel ist einer der Aufprallsensoren 120 auf der rechten vorderen Hälfte des Fahrzeugs 100 und der andere der Aufprallsensoren 120 auf der linken vorderen Hälfte des Fahrzeugs 100 angeordnet. Die Aufprallsensoren 120 sind ausgebildet, um jeweils ein Beschleunigungssignal bereitzustellen. Die vorausschauende Sensorik 110 kann auch als Umfeldsensorik 110 bezeichnet werden. Die vorausschauende Sensorik 110 ist ausgebildet, um Sensordaten bereitzustellen. Eine Sensor-Logik 130 ist ausgebildet, um aus den Sensordaten der vorausschauenden Sensorik 110 Kollisionsparameter zu ermitteln und an eine Auswerte-Elektronik 140 zu übergeben. Die Auswerte-Elektronik 140 ist ausgebildet, um sowohl die Kollisionsparameter der Sensor-Logik 130 als auch jeweils das Beschleunigungssignal der zwei Aufprallsensoren 120 zu empfangen. Die Auswerte-Elektronik 140 ist ausgebildet, um zumindest einen Kollisionsparameter der Sensor-Logik 130 basierend auf zumindest einem Beschleunigungssignal zumindest eines Aufprallsensors 120 zu plausibilisieren. Gemäß einem Ausführungsbeispiel ist die Auswerte-Elektronik 140 dazu ausgebildet, um basierend auf zumindest einem Beschleunigungssignal zumindest eines Aufprallsensors 120 zumindest einen Kollisionswert zu bestimmen und mit einem entsprechenden Kollisionsparameter zu kombinieren, um den Kollisionsparameter zu plausibilisieren. Der Ausgang der Auswerte-Elektronik 140 ist mit dem Eingang einer Auslöselogik 150 verbunden. Die Auslöselogik 150 ist mit einem Insassen-Schutzsystem 160 verbunden. Die Auswerte-Elektronik 140 ist ausgebildet, um einen plausibilisierten Kollisionsparameter an die Auslöselogik 150 auszugeben. Die Auslöselogik 150 ist ausgebildet, um basierend auf dem plausibilisierten Kollisionsparameter eine Auslöseentscheidung zu treffen und an das Insassenschutzsystem 160 auszugeben.

In einem Ausführungsbeispiel handelt es sich bei den Aufprallsensoren 120 um Fußgängerschutzsensoren 120. Die Aufprallsensoren 120 sind im vorderen Bereich des Fahrzeuges montiert, z. B. im Bereich des vorderen Stoßfängers. Die Aufprallsensoren 120 sind ausgebildet, um gemäß diesem Ausführungsbeispiel Beschleunigungswerte zu erfassen. Durch die Auswertung der Beschleunigungswerte von mindestens zwei Sensoren in der Auswerte-Elektronik 140 kann nicht nur ein Aufprall detektiert werden, sondern durch Betrachtung auch des zeitlichen Verhaltens, bzw. eines zeitlichen Versatzes zwischen den Daten der Aufprallsensoren 120 auch Informationen gewonnen werden über den Aufprallort relativ zum Einbauort der Aufprallsensoren 120. Darüber hinaus lassen sich mittel mathematischer Berechnungen weitere Kollisionswerte bestimmen, wie Deformationsgeschwindigkeit, Eindringinformation oder Größe des Kollisionspunktes bzw. Aufprallpunktes.

Der vorausschauende Sensor 110 ist ausgebildet, um ein mögliches Kollisionsobjekt 180 im Umfeld des Fahrzeugs 100 bereits vor einer Kollision zu erfassen. Der vorausschauende Sensor 110 verwendet berührungslose, zum Teil bildgebende Verfahren und/oder Sensoren, wie beispielsweise eine 2D-Kamera, eine 3D-Kamera, einen Infrarot-, Lidar-, Radar und/oder Ultraschall-Sensor. Der eingesetzte vorausschauende Sensor 110 kann fehlerbehaftet sein. Die Sensor-Logik 130 ist ausgebildet, um basierend auf von dem vorausschauenden Sensor bereitgestellten Daten das mögliche Kollisionsobjekt 180 zu identifizieren und für das Kollisionsobjekt 180 mindestens einen Kollisionsparameter zu bestimmen und an die Auswerte-Elektronik 140 auszugeben.

In dem in Fig.1 dargestellten Ausführungsbeispiel ist eine Kollision zwischen dem Fahrzeug 100 und dem Kollisionsobjekt 180 auf der in Fahrtrichtung linken Hälfte der Fahrzeugfrontseite zu erwarten. Die Sensor-Logik 130 wird eine Überlappung von Kollisionsobjekt 180 und Fahrzeug 100 von ca. 40% feststellen und einen entsprechenden Wert der Überlappung als Kollisionsparameter bereitstellen.

Die Auswerte-Elektronik 140 ist ausgebildet, um den die Überlappung betreffenden Kollisionsparameter und weitere Kollisionsparameter der Sensor-Logik 130 unter Verwendung der aus den Daten der Aufprallsensoren 120 bestimmten Kollisionswerte zu plausibilisieren oder zu validieren, und ein von der Plausibilisierung abhängiges Signal an die Auslöse-Elektronik 150 zu übermitteln. Das an die Auslöse-Elektronik 150 übermittelte Signal enthält gemäß diesem Ausführungsbeispiel Informationen über Zeitpunkt, Ort und Schwere der Kollision. Unter Verwendung des an die Auslöse-Elektronik 150 übermittelten Signals ist die Auslöse-Elektronik 150 ausgebildet, um ein entsprechendes Insassenschutzsystem 160 im Fahrzeug 100 auszulösen. Bei dem Insassenschutzsystem 160 kann es sich um einen Gurtstraffer, um einen Fahrer-, Beifahrer- und/oder Seitenairbag oder um ein anderes Insassenschutzmittel handeln.

Im Folgenden wird anhand von Fig. 1 ein Ausführungsbeispiel der vorliegenden Erfindung näher beschrieben. Dabei sind die Aufprallsensoren 120 als Fußgängerschutzsensoren realisiert. Die Umfeldsensorik 110 stellt zusammen mit der Sensor-Logik 130 unmittelbar vor dem Crash gewisse Informationen in Form von Kollisionsparametern zur Verfügung. Unmittelbar nach dem Crash ermittelt die Logik 140 aus den Signalen der Fußgängerschutzsensoren 120 zum Teil den Kollisionsparametern entsprechende Größen in Form von Kollisionswerten.

Ein die Zeit bis zum Aufprall, also die Zeit bis zur Kollision, definierender Kollisionsparameter entspricht einem die Aufprallzeit definierenden Kollisionswert, der mittels eines Beschleunigungsgrenzwertes aus dem Sensorsignal des Aufprallsensors 120 ermittelt wird. Ein die Überlappung, bzw. Verschiebung zueinander, der beiden Kollisionspartner, d. h. Fahrzeug 100 und Kollisionsobjekt 180, definierender Kollisionsparameter entspricht einem Kollisionswert, der eine aus den Beschleunigungssignalen der Fußgänger-Schutzsensoren 120 gewonnene Information zu Überlappung, bzw. Verschiebung zueinander, der beiden Kollisionspartner 100, 180 definiert.

Gemäß einem Ausführungsbeispiel kann die Überlappung, bzw. Verschiebung zueinander, der beiden Kollisionspartner 100, 180 von der Auswerte-Elektronik 140 auch unter Zuhilfenahme der Diagnose über zerstörte Aufprallsensoren 120 oder zerstörte Bussegmente bestimmt werden. Hierzu wird der Zustand der Aufprallsensoren 120 überwacht, sowie der Bussegmente, an denen die Aufprallsensoren 120 hängen. Die Bussegmente sind dabei derart ausgeformt, dass ein Crash auf einer Fahrzeugseite auch nur den Aufprallsensor 120 auf dieser Seite und das Bussegment auf dieser Seite des Fahrzeugs betrifft, bzw. nur das Bussegment auf der Seite des Crashs ausfällt.

Ein die Aufprallgeschwindigkeit bzw. Kollisionsgeschwindigkeit definierender Kollisionsparameter, ermittelt aus Daten der vorausschauenden Sensorik 110 steht ein die Schätzung der Deformationsgeschwindigkeit aus den Beschleunigungswerten der Aufprallsensoren 120 definierender Kollisionswert gegenüber. Einem die Masse des Kollisionsgegenstandes 180 definierender Kollisionsparameter steht entsprechend ein Kollisionswert gegenüber, der die durch Sensordiagnose der Aufprallsensoren 120 ermittelte Eindringinformation definiert. Dem Kollisionsparameter Kollisionspunkt, bzw. Aufprallpunkt ermittelt von der Auswerte-Logik 130 steht als entsprechender Kollisionswert die auf Basis der Aufprallsensorwerte geschätzte Größe des Kollisionspunktes bzw. Aufprallpunktes gegenüber. Darüber hinaus liefert die Auswerte-Logik 130 im Zusammenspiel mit der vorausschauenden Sensorik 110 weitere Werte als Kollisionsparameter, wie die Objektklassifizierung und einen Aufprallwinkel.

Wie dargestellt kann zu einigen wichtigen als Kollisionsparameter dargestellten Werten eine entsprechende Schätzung aus den Beschleunigungsdaten der Aufprallsensoren 120 erfolgen. Eine jeweils entsprechende Schätzung kann als Kollisionswert zur Plausibilisierung des jeweiligen Kollisionsparameters eingesetzt werden.

Werden die Werte der Umfeldsensorik 110 durch die Fußgängerschutz-Sensorik 120 plausibilisiert, werden die Werte der Umfeldsensorik 110 mit hoher Gewichtung in den Algorithmus und die Auslöselogik 150 einbezogen.

Der basierend auf Daten der Umfeldsensorik 110 vorhergesagte Kontaktzeitpunkt (Time-to-impact) muss zum tatsächlichen Kontaktzeitpunkt $T_0$ passen. Dieser kann sehr gut innerhalb von 1-2 ms, in denen beispielsweise eine Überschreitung eines Schwellwertes erfolgt, aus den Beschleunigungsdaten der Aufprallsensoren 120 ermittelt werden. Der Versatz, die Überlappung und der Kollisionspunkt (Impact-Point) kann durch den Vergleich von verschiedenen Sensor-Beschleunigungswerten oder abgeleiteten Merkmalen ermittelt werden.

$$A = |x_{left} - x_{right}| \,/\, |x_{left} + x_{right}|$$

Diese Beziehung ist eine normierte Asymmetrie, die in verschiedenen Algorithmen, beispielsweise zur Bestimmung eines Upfront-Sensor-Offsets oder eines Fußgänger-Schutzsystems, verwendet wird. Dabei kann $x_{left}$ eine von dem links angeordneten Aufprallsensor 120 erfasste Beschleunigung und $x_{right}$ eine von dem rechts angeordneten Aufprallsensor 120 erfasste Beschleunigung darstellen. Die Aufprallgeschwindigkeit, Kollisionsgeschwindigkeit (Closing-Velocity) kann über die Signalstärke aller Sensoren, beispielsweise über eine Summenbildung, unter Berücksichtigung der normierten Asymmetrie der Signale, wie bei einer Offset-Berechnung, aus den Beschleunigungsdaten geschätzt werden.

Das Gewicht der Information im Kern-Algorithmus, der für die Auslösung des Insassenschutzsystems 160 zuständig ist, kann in mehreren Stufen in Abhängigkeit der Übereinstimmung und der Informationsgüte erhöht werden, wie es an den folgenden Beispielen erläutert wird.

So kann in einem Ausführungsbeispiel bei Übereinstimmung des Kontaktzeitpunktes mit der Schätzung der Zeit bis zum Aufprall (Time-To-Impact) eine leichte Gewichtung gewählt werden. Eine mittlere Gewichtung kann bei Übereinstimmung der Offset-Information aus der Diagnose oder der Beschleunigungssignale gewählt werden. Ein hohes Gewicht kann bei quantitativer Übereinstimmung von der Relativgeschwindigkeit und des Offsets gewählt werden.

Die plausibilisierte Information, also beispielsweise ein plausibilisierter Kollisionsparameter, kann zudem die Auslöselogik 150 dahin gehend beeinflussen, dass Schutzsysteme 160 freigegeben oder gesperrt werden oder Verzögerungszeiten variiert werden. Beispielsweise gibt ein erkanntes Offset - oder Winkel-Szenario die Auslösung eines aufblasbaren Vorhangs, einen sogenannten Inflatable Curtain frei.

Fig. 2 zeigt ein Ablaufdiagramm eines Verfahrens 200 zur Plausibilisierung einer vorausschauenden Sensorik gemäß einem Ausführungsbeispiel der vorliegenden Erfindung. Das Verfahren 200 kann beispielsweise genutzt werden, um bei einem Crash eine Plausibilisierung der in Fig. 1 gezeigten vorausschauenden Sensorik 110 durch die Fußgängerschutzsensorik 120 durchzuführen. Von der vorausschauenden Sensorik wird ein Sensorsignal 212 bereitgestellt. Das Verfahren 200 umfasst einen Schritt 210 in dem das Sensorsignal 212 der vorausschauenden Sensorik plausibilisiert wird. Der Schritt 210 des Plausibilisierens gibt das plausibilisierte Sensorsignal aus, d. h., mit dem plausibilisierten Sensorsignal, das im Schritt 210 ermittelt und ausgegeben wird, kann eine Auslöselogik ein oder mehrere Insassenschutzvorrichtungen aktivieren bzw. auslösen oder deaktivieren.

Gemäß einem Ausführungsbeispiel umfasst das Verfahren 200 ferner einen Schritt 213 des Bestimmens eines Kollisionsparameters 214 unter Verwendung eines Aufprallsensorsignals 216, das ein Signal, beispielsweise des in Fig. 1 gezeigten Aufprallsensor 120 des Fahrzeugs 100 repräsentiert. Der Schritt 210 des Plausibilisierens umfasst gemäß diesem Ausführungsbeispiel einen Schritt 220 des Bewertens. In dem Schritt 220 des Bewertens wird für den Kollisionsparameter 214 unter Verwendung des Aufprallsensorsignals 216 eine Zuverlässigkeit 223 bestimmt. Hierzu umfasst der Schritt des Bewertens 220 einen Schritt 225, in dem aus dem Aufprallsensorsignal 216 ein Kollisionswert 227 ermittelt wird. Durch einen Vergleich zwischen dem Kollisionswert 227 und dem Kollisionsparameter 214 wird die Zuverlässigkeit 223 des Kollisionsparameters 214 bestimmt. Der Schritt 220 des Bewertens wird gefolgt von einem Schritt 230 des Gewichtens. In dem Schritt 230 wird aus dem Kollisionsparameter 214, der Zuverlässigkeit 223 und einer vorbestimmten, beispielsweise in einer Speichereinrichtung hinterlegten Informationsgüte eine Güte 235 des Sensorsignals 212 bestimmt. Durch Bestimmung der Güte 235 wird das Sensorsignal 212 der vorausschauenden Sensorik 110 plausibilisiert und die Güte 235 kann als Ergebnis des Schritts des Plausibilisierens 210 ausgegeben werden.

Gemäß einem Ausführungsbeispiel umfasst das Verfahren 200 vor dem Schritt 210 des Plausibilisierens einen Schritt 250 des Einlesens. Im Schritt 250 des Einlesens werden der aus dem Sensorsignal 212 der vorausschauenden Sensorik im Schritt 213 des Bestimmens bestimmte Kollisionsparameter 214 und das Aufprallsensorsignal 216 eingelesen und dem Schritt 210 des Plausibilisierens zur Verfügung gestellt. Weiterhin wird im Schritt 250 des Einlesens der Zustand 255 der Aufprallsensorik 120 überwacht und an den Schritt 210 des Plausibilisierens übermittelt.

Die Schritte 220, 230 des Bewertens und des Gewichtens innerhalb des Schrittes 210 des Plausibilisierens können mehrfach parallel für verschiedene Kollisionsparameter 214 und äquivalente Kollisionswerte 227 ausgeführt werden. In diesem Fall werden im Schritt 213 des Bestimmens mehrere Kollisionsparameter 214 bestimmt und im Schritt 225 des Kollisionswert-Bestimmens mehrere Kollisionswerte 227 bestimmt.

Der Schritt 213 des Bestimmens kann alternativ auch Teil des Schritts 210 des Plausibilisierens sein. In diesem Fall kann der Schritt 210 des Plausibilisierens ausgeprägt sein, um anstelle des Kollisionsparameters 214 das Sensorsignal 212 zu übernehmen und dann vor dem Schritt 220 des Bewertens oder alternativ im Schritt 220 des Bewertens aus dem Sensorsignal 212 den Kollisionsparameter 214 zu bestimmen. Dementsprechend kann der Schritt 250 des Einlesens alternativ anstelle des Kollisionsparameters 214 das Sensorsignal 212 einlesen.

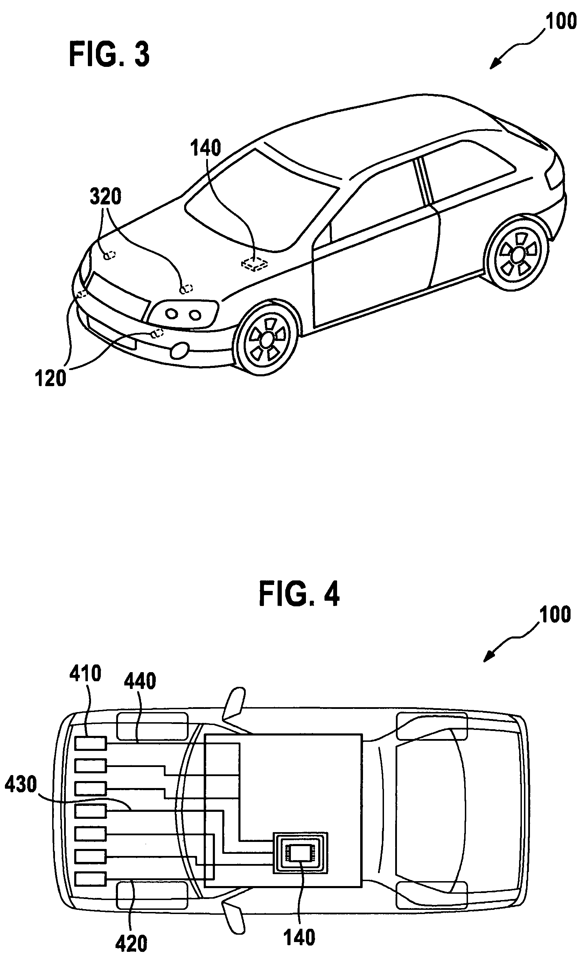

Fig. 3 zeigt eine bildliche Darstellung eines Fahrzeugs 100 mit Fußgängerschutzsensor 120 und Upfront-Sensor 320 gemäß einem Ausführungsbeispiel der vorliegenden Erfindung. In Fig. 3 weist das Fahrzeug 100 zwei Fußgängerschutzsensoren 120 auf, welche im Frontbereich des Fahrzeugs 100 in der Stoßfängerverkleidung montiert sind. Hinter der Stoßfängerverkleidung, d. h., in Richtung des Fahrzeughecks, sind im Motorraum zwei Upfront-Sensoren 320 montiert. Durch einen, gegenüber den Fußgängerschutzsensoren 120 weiter im Fahrzeuginneren liegenden Einbauort, sind die Upfront-Sensoren hinsichtlich Signalqualität, Alterung, Beschädigung und / oder Veränderung durch den Fahrzeugnutzer im Vergleich zu den Fußgängerschutzsensoren 120 überlegen. Dies wird jedoch dadurch ausgeglichen, dass die Daten der Fußgängerschutzsensoren 120 herangezogen werden können, um Daten einer vorausschauenden Sensorik des Fahrzeugs 100 zu plausibilisieren. Dadurch kann auf den Upfront-Sensor 320 verzichtet werden. Im Fahrzeuginneren findet sich die Auswerte-Logik 140, die über einen Datenbus mit den Fußgängerschutzsensoren 120, der vorausschauenden Sensorik und den Upfront-Sensoren 320 verbunden ist.

Fig. 4 zeigt ein Fahrzeug 100 mit einem zur Crashauswertung optimierten Kabelbaum gemäß einem Ausführungsbeispiel der vorliegenden Erfindung. Das Fahrzeug 100 weist an einer Seite, seiner Frontseite, eine Reihe von Sensoren 410 auf, von denen der Übersichtlichkeit halber nur einer mit dem Bezugszeichen 410 versehen ist. Die Sensoren 410 können sowohl Fußgängerschutzsensoren als auch vorausschauende Sensorik darstellen. Gemäß diesem Ausführungsbeispiel handelt es sich bei den Sensoren 410 um Fußgängersensoren PCS (Pedestrian Collision Sensor). Jeder der Sensoren 410 ist mit einem Ast 420, 430, 440 eines Kabelbaums mit einer Auswerteelektronik 140 verbunden. Die Auswerteelektronik 140 kann als ein Steuergerät ausgeprägt sein. Gemäß diesem Ausführungsbeispiel sind die Äste 420, 430, 440 in der Art ausgeprägt, dass sie sich nicht mit den Kabeln oder Leitungen eines anderen Astes desselben Kabelbaums kreuzen. Der Kabelbaumast 420, der einem links angeordneten der Sensoren 410 zugeordnet ist, befindet sich in Fahrtrichtung des Fahrzeuges 100 nur auf der linken Seite des Fahrzeuges 100. Der Kabelbaumast 430, der einem mittleren der Sensoren 410 zugeordnet ist, erstreckt sich in Fahrtrichtung des Fahrzeuges 100 nur in der Mitte des Fahrzeuges 100.

Der Kabelbaumast 440, der einem rechts angeordneten der Sensoren 410 zugeordnet ist, erstreckt sich in Fahrtrichtung des Fahrzeuges 100 nur auf der rechten Seite des Fahrzeuges 100. Die Auswerteelektronik 140 ist räumlich im Inneren des Fahrzeuges 100 angeordnet.

Ein wie in Fig. 4 zur Crashauswertung optimierter Kabelbaum bietet neben den reinen Sensorsignalen der Sensoren 410 noch weitere Möglichkeiten der Validierung und Plausibilisierung. Ein Crash auf der linken Fahrzeugseite wird auch nur die der Sensoren 410 und die Kabelbaumäste 420 des Kabelbaums auf der linken Fahrzeugseite direkt beeinflussen, d. h. die Sensoren 410 und gleichzeitig oder alternativ der Kabelbaum werden derart beschädigt, dass der betroffene Bereich des Kabelbaums ausfällt, d. h., im beschriebenen Szenario der Ast 420 des Kabelbaums wird ausfallen. Die Information über den Ausfall des Astes 420 des Kabelbaums kann ausgewertet werden und plausibilisiert einen Crash auf der linken Fahrzeugseite, wie er beispielsweise von einer vorausschauenden Sensorik prognostiziert wurde.

Somit kann neben den Beschleunigungs-Signalen, beispielsweise von Aufprallsensoren, auch die Diagnosefähigkeit der Sensoren oder des Datenbusses genutzt werden. Ein Einschlag eines Objektes mit hoher Masse führt ggf. zur Zerstörung des Sensors. Dies kann detektiert werden und sogar einem Offsetwert zugeordnet werden. Bei Bussystemen kann der Kabelbaum für diese Anwendung optimiert werden. Ein zerstörter Sensor kann zum Ausfall des gesamten Astes des Busses führen. Eine Auswertung der Crashgeometrie ist jedoch nur dann möglich, wenn die Sensoren einer Seite zu einem Ast zusammengeführt werden.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

**Patentansprüche**

1. Verfahren (200) zur Plausibilisierung einer vorausschauenden Sensorik (110) eines Fahrzeugs (100), welches folgenden Schritt umfasst:

   Plausibilisieren (210) eines aus einem Sensorsignal (212) der vorausschauenden Sensorik (110) bestimmten Kollisionsparameters (214) unter Verwendung eines Aufprallsensorsignals (216), das ein Signal eines Aufprallsensors (120) des Fahrzeugs (100) repräsentiert, wobei im Schritt des Plausibilisierens (210) ein Schritt des Bewertens (220) des Kollisionsparameters (214) hinsichtlich seiner Zuverlässigkeit (223) unter Verwendung des Aufprallsensorsignals (216) durchgeführt wird, wobei im Schritt des Plausibilisierens (210) aus dem Aufprallsensorsignal (216) ein Kollisionswert (227) bestimmt wird und im Schritt des Bewertens (220) die Zuverlässigkeit (223) mittels eines Vergleichs zwischen dem Kollisionsparameter (214) und dem Kollisionswert (227) ermittelt wird,
   **dadurch gekennzeichnet, dass**
   im Schritt des Plausibilisierens (210) ein Schritt des Gewichtens (230) des Kollisionsparameters basierend auf der Zuverlässigkeit (223) und einer für den Kollisionsparameter (214) vorbestimmten Informationsgüte durchgeführt wird.

2. Verfahren gemäß Anspruch 1, mit einem Schritt des Bestimmens (240) des Kollisionsparameters (214) in Form eines Kontaktzeitpunktes, einer Überlappung, eines Versatzes, einer Verformungsgeschwindigkeit, einer Aufprallmasse und/oder einem Kontaktort aus dem Sensorsignal.

3. Verfahren gemäß Anspruch 1, bei dem im Schritt des Plausibilisierens (210) ein aus dem Sensorsignal (212) der vorausschauenden Sensorik (110) bestimmter weiterer Kollisionsparameter (214) unter Verwendung des Aufprallsensorsignals (216) plausibilisiert wird, wobei im Schritt des Gewichtens (230) der weitere Kollisionsparameter (214) basierend auf der für den weiteren Kollisionsparameter (214) ermittelten Zuverlässigkeit (223) und einer für den weiteren Kollisionsparameter (214) vorbestimmten weiteren Informationsgüte gewichtet wird.

4. Verfahren gemäß einem der vorangegangenen Ansprüche, mit einem Schritt des Einlesens (250) des Aufprallsensorsignals (216) und/oder des Sensorsignals (212) von der vorausschauenden Sensorik (110).

5. Verfahren gemäß einem der vorangegangenen Ansprüche, bei dem das Aufprallsensorsignal (216) ausgebildet ist, um einen Zustand (255) des Aufprallsensors und/oder einer Übertragungsleitung für das Aufprallsensorsignal (216) des Aufprallsensors (120) anzuzeigen und im Schritt des Plausibilisierens (210) der Kollisionsparameter (214) unter Verwendung des Zustands (255) plausibilisiert wird

6. Vorrichtung (140) zur Plausibilisierung einer vorausschauenden Sensorik (110) eines Fahrzeugs (100), wobei die Vorrichtung (140) ausgebildet ist, um die Schritte eines Verfahrens (200) gemäß einem der Ansprüche 1 bis 5 durchzuführen.

7. Computer-Programmprodukt mit Programmcode zur Durchführung des Verfahrens (200) nach einem der Ansprüche 1 bis 5, wenn das Programm auf einer Vorrichtung (140) ausgeführt wird.

**Claims**

1. Method (200) for checking the plausibility of a predictive sensor system (110) of a vehicle (100), which comprises the following step of:

    checking the plausibility (210) of a collision parameter (214) determined from a sensor signal (212) from the predictive sensor system (110) using an impact sensor signal (216) which represents a signal from an impact sensor (120) of the vehicle (100), a step of assessing (220) the reliability (223) of the collision parameter (214) using the impact sensor signal (216) being carried out in the plausibility-checking step (210), a collision value (227) being determined from the impact sensor signal (216) in the plausibility-checking step (210), and the reliability (223) being determined in the assessing step (220) by comparing the collision parameter (214) and the collision value (227),
    **characterized in that**
    a step of weighting (230) the collision parameter on the basis of the reliability (223) and an information quality predetermined for the collision parameter (214) is carried out in the plausibility-checking step (210).

2. Method according to Claim 1, having a step of determining (240) the collision parameter (214) in the form of a contact time, an overlap, an offset, a deformation speed, an impact mass and/or a contact location from the sensor signal.

3. Method according to Claim 1, in which the plausibility of a further collision parameter (214) determined from the sensor signal (212) from the predictive sensor system (110) is checked using the impact sensor signal (216) in the plausibility-checking step (210), the further collision parameter (214) being weighted on the basis of the reliability (223) determined for the further collision parameter (214) and a further information quality predetermined for the further collision parameter (214) in the weighting step (230).

4. Method according to one of the preceding claims, having a step of reading in (250) the impact sensor signal (216) and/or the sensor signal (212) from the predictive sensor system (110).

5. Method according to one of the preceding claims, in which the impact sensor signal (216) is designed to indicate a state (255) of the impact sensor and/or of a transmission line for the impact sensor signal (216) from the impact sensor (120), and the plausibility of the collision parameter (214) is checked using the state (255) in the plausibility-checking step (210).

6. Apparatus (140) for checking the plausibility of a predictive sensor system (110) of a vehicle (100), the apparatus (140) being designed to carry out the steps of a method (200) according to one of Claims 1 to 5.

7. Computer program product having program code for carrying out the method (200) according to one of Claims 1 to 5 when the program is executed on an apparatus (140).

**Revendications**

1. Procédé (200) destiné au calcul de plausibilité d'un système de capteur (110) prédictif d'un véhicule (100), comprenant les étapes consistant à :

    calculer la plausibilité (210) d'un paramètre de collision (214) déterminé à partir d'un signal de capteur (212) du système de capteur (110) prédictif par utilisation d'un signal de capteur d'impact (216) qui représente un signal d'un capteur d'impact (120) du véhicule (100), dans lequel, lors de l'étape de calcul de plausibilité (210), une étape d'évaluation (220) du paramètre de collision (214) est effectuée en ce qui concerne sa fiabilité (223) par utilisation du signal de capteur d'impact (216), dans lequel, lors de l'étape de calcul de plausibilité (210), une valeur de collision (227) est déterminée à partir du signal de capteur d'impact (216) et, lors de l'étape d'évaluation (220), la fiabilité (223) est obtenue en effectuant une comparaison entre le paramètre de collision (214) et la valeur de collision (227), **caractérisé en ce que**, lors de l'étape de calcul de plausibilité (210), une étape de pondération (230) du paramètre de collision est effectuée sur la base de la fiabilité (223) pour le paramètre de collision (214) et de données d'informations prédéterminées.

2. Procédé selon la revendication 1, comportant une étape consistant à déterminer (240) le paramètre de collision (214) sous la forme d'un instant de contact, d'une superposition, d'un décalage, d'une vitesse de déformation, d'une masse d'impact et/ou d'un emplacement de contact.

3. Procédé selon la revendication 1, dans lequel, lors de l'étape de calcul de plausibilité (210), un autre paramètre de collision (214) déterminé est soumis à un calcul de plausibilité à partir du signal de capteur (212) du système de capteur (110) prédictif par utilisation du signal de capteur d'impact (216), dans lequel, lors de l'étape de pondération (230), l'autre paramètre de collision (214) est pondéré sur la base de la fiabilité (223) déterminée pour l'autre paramètre de collision (214) et d'une autre donnée d'information prédéterminée pour l'autre paramètre de collision (214).

4. Procédé selon l'une quelconque des revendications précédentes, comportant une étape consistant à lire en entrée (250) le signal de capteur d'impact (216) et/ou le signal de capteur (212) provenant du système de capteur (110) prédictif.

5. Procédé selon l'une quelconque des revendications précédentes, dans lequel le signal de capteur d'impact (216) est conçu pour indiquer un état (255) du capteur d'impact et/ou d'une ligne de transmission destinée au signal de capteur d'impact (216) du capteur d'impact (120) et, lors de l'étape de calcul de plausibilité (210), le paramètre de collision (214) est soumis à un calcul de plausibilité par utilisation dudit état (255).

6. Dispositif (140) destiné au calcul de plausibilité d'un système de capteur (110) prédictif d'un véhicule (100), dans lequel le dispositif (140) est conçu pour mettre en oeuvre les étapes d'un procédé (200) selon l'une quelconque des revendications 1 à 5.

7. Produit de programme informatique comportant un code de programme destiné à mettre en oeuvre le procédé (200) selon l'une quelconque des revendications 1 à 5, lorsque le programme est exécuté sur un dispositif (140).

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10309714 A1
- WO 2011051224 A1